# EUROPEAN PATENT SPECIFICATION

(11) **EP 3 797 917 B1**
(45) Date of publication and mention of the grant of the patent: **06.12.2023**
(21) Application number: 20180254.3
(22) Date of filing: 16.06.2020
(51) Int. Cl.: B23K 26/03

(54) **LASER WELDING STATE EVALUATION APPARATUS, METHOD, SYSTEM AND PROGRAM**
BEWERTUNGSVORRICHTUNG, BEWERTUNGSVERFAHREN, BEWERTUNGSSYSTEM UND BEWERTUNGSPROGRAMM ZUR BEWERTUNG EINES LASERSCHWEISSZUSTANDS
APPAREIL D'ÉVALUATION, PROCÉDÉ D'ÉVALUATION ET PROGRAMME D'ÉVALUATION POUR ÉVALUATION D'UN ÉTAT DE SOUDAGE AU LASER

(30) Priority: 28.06.2019 JP 2019121885
(43) Date of publication of application: 31.03.2021
(73) Proprietor: Kabushiki Kaisha Yaskawa Denki, Kitakyushu-shi, Fukuoka 806-0004 (JP)
(72) Inventor: FUKUSHIMA, Seiichiro, Kitakyushu-shi Fukuoka 806-0004 (JP); KOBAYASHI, Yuya, Kitakyushu-shi Fukuoka 806-0004 (JP); MOTOYOSHI, Takashi, Kitakyushu-shi Fukuoka 806-0004 (JP)
(74) Representative: Viering, Jentschura & Partner mbB Patent- und Rechtsanwälte

(56) References cited:
- EP-A2- 2 921 250
- WO-A2-2014/155191
- JP-A- 2017 202 506

## Description

### BACKGROUND

### FIELD OF THE INVENTION

The present invention relates to an evaluation apparatus, an evaluation method, an evaluation system, and an evaluation program.

### DISCUSSION OF THE BACKGROUND

WO 2014/155191 A2 discloses a welded portion inspection apparatus and an inspection method thereof, wherein a welding laser beam is radiated along a welding loci set in workpieces, or an inspection laser beam is radiated along scanning loci set in a molten pool of the workpieces that are molten by radiation of the welding laser beam. A returned light beam including reflection light from the molten pool of the workpieces, vapor light caused due to melting and evaporation of the workpieces, and thermal radiation light emitted from the molten pool of the workpieces is received, and a welding state of a welded portion of the workpieces is inspected based on an intensity change of the returned light beam thus received.

Further evaluation systems and methods are known from JP 2017 202506 A and EP 2 921 250 A2.

Some robots known in the art make motions by driving a plurality of joints of the robots. Such robot includes an end effector mounted on the leading end of the robot. The end effector varies depending on the application in which the robot is used, such as machining, welding, and holding of a workpiece. Using the end effector, the robot performs these kinds of work.

Patent document 1 discloses an end effector that serves as an inspection device for inspecting a welding spot. Specifically, the inspection device includes a laser head capable of changing a shape defined by a track of laser radiation. While performing laser welding on the workpiece, the inspection device inspects welding spots on the workpiece using the laser head.

Patent document 1: JP 2014-198345A.

In the end effector recited in JP 2014-198345A, however, there is room for improvement in the accuracy of evaluation as to whether there is a welding defect, such as boring, on a workpiece.

It is an object of the embodiments of the present invention to provide an evaluation apparatus, an evaluation method, an evaluation system, and an evaluation program that increase the accuracy of evaluation as to whether there is a welding defect on a workpiece.

### SUMMARY

The present invention provides an evaluation apparatus according to independent claim 1, an evaluation method according to independent claim 8, and an evaluation program according to independent claim 13. The dependent claims show further examples and/or applications of the subject matters of the independent claims, respectively. According to one aspect of the present invention, an evaluation apparatus includes an obtainer, a detector, a generator, and an evaluator. The obtainer is configured to obtain track information showing a track of a laser target spot made by a laser beam on a workpiece. The detector is configured to detect intensity information showing, in a time-series order, intensities of an optical feedback of the laser beam returning from the workpiece. The generator is configured to correlate the track information and the intensity information with each other based on time so as to generate intensity distribution information showing a distribution of the intensities over the workpiece. The evaluator is configured to evaluate, based on the intensity distribution information, a welding state indicating how the workpiece is welded by the laser beam.

According to another aspect of the present invention, an evaluation method includes obtaining track information showing a track of a laser target spot made by a laser beam on a workpiece. Intensity information is detected. The intensity information shows, in a time-series order, intensities of an optical feedback of the laser beam returning from the workpiece. The track information and the intensity information are correlated with each other based on time so as to generate intensity distribution information showing a distribution of the intensities over the workpiece. A welding state indicating how the workpiece is welded by the laser beam is evaluated based on the intensity distribution information.

According to another aspect of the present invention, an evaluation system includes a laser head, a robot, a controller, and an evaluation apparatus. The laser head is configured to change a shape of a track of a laser target spot made by a laser beam on a workpiece. The robot is configured to move the laser head relative to the workpiece. The controller is configured to control a motion of the laser head and a motion of the robot. The evaluation apparatus is configured to evaluate a welding state indicating how the workpiece is welded by the laser beam. The evaluation apparatus includes an obtainer, a detector, a generator, and an evaluator. The obtainer is configured to obtain, from the controller, track information showing the track of the laser target spot. The detector is configured to detect intensity information showing, in a time-series order, intensities of an optical feedback of the laser beam returning from the workpiece. The generator is configured to correlate the track information and the intensity information with each other based on time so as to generate intensity distribution information showing a distribution of the intensities over the workpiece. The evaluator is configured to evaluate the welding state based on the intensity distribution information.

According to the other aspect of the present invention, an evaluation program is for causing the evalution apparatus of the invention to perform processing. The processing includes obtaining track information showing a track of a laser target spot made by a laser beam on a workpiece. Intensity information is detected. The intensity information shows, in a time-series order, intensities of an optical feedback of the laser beam returning from the workpiece. The track information and the intensity information are correlated with each other based on time so as to generate intensity distribution information showing a distribution of the intensities over the workpiece. A welding state indicating how the workpiece is welded by the laser beam is evaluated based on the intensity distribution information.

The above-described embodiments provide an evaluation apparatus, an evaluation method, an evaluation system, and an evaluation program that increase the accuracy of evaluation as to whether there is a welding defect on a workpiece.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is a schematic illustrating an evaluation method according to an embodiment;
FIG. 2 is a schematic illustrating an example configuration of a robot system according to an embodiment;
FIG. 3 is a schematic illustrating an example configuration of a head according to an embodiment;
FIG. 4 is a block diagram illustrating an example configuration of an evaluation apparatus and an example configuration of a learning device according to an embodiment;
FIG. 5 illustrates an example processing of generating intensity distribution information according to an embodiment;
FIG. 6 is a flowchart of a procedure for processing performed by the evaluation apparatus;
FIG. 7 illustrates processing of generating intensity distribution information according to a first modification;
FIG. 8 illustrates processing of generating intensity distribution information according to a second modification;
FIG. 9 illustrates the example processing of the generating intensity distribution information according to the second modification; and
FIG. 10 illustrates processing of obtaining track information according to a third modification;

### DESCRIPTION OF THE EMBODIMENTS

By referring to the accompanying drawings, an evaluation apparatus, an evaluation method, an evaluation system, and an evaluation program according to embodiments of the present invention will be described in detail below. It is noted that the following embodiments are provided for example purposes only and are not intended for limiting purposes.

As used herein, the term "uniform" means, in a broad sense, exactly uniform or approximately uniform within some tolerance from exactly uniform. Also as used herein, the term "orthogonal" means, in a broad sense, exactly orthogonal or approximately orthogonal within some tolerance from exactly orthogonal. Also as used herein, the term "perpendicular" means, in a broad sense, exactly perpendicular or approximately perpendicular within some tolerance from exactly perpendicular. Also as used herein, the term "parallel" means, in a broad sense, exactly parallel or approximately parallel within some tolerance from exactly parallel. That is, these terms are used with production-related and installation-related tolerances and errors taken into consideration.

### Outline of Evaluation Method

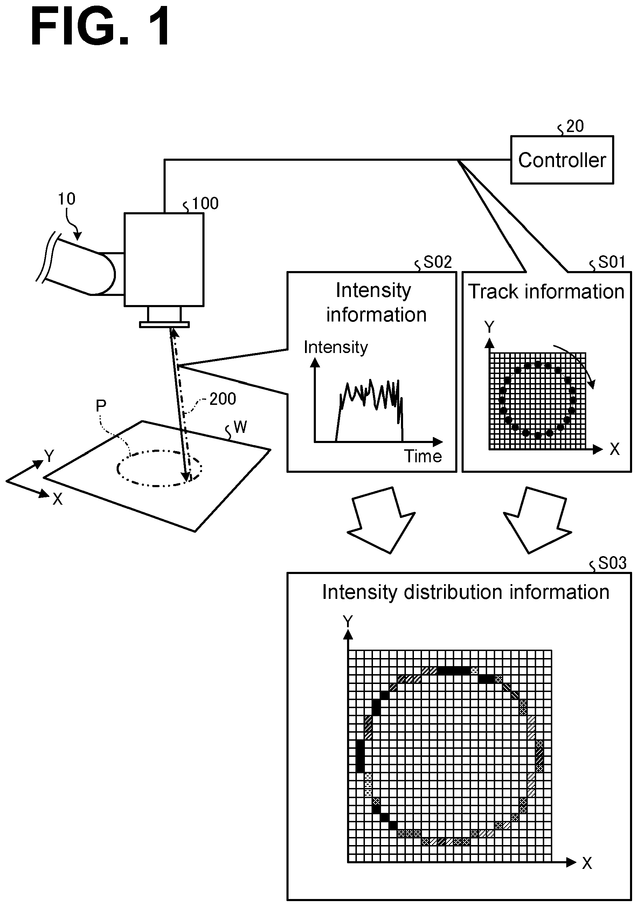

By referring to FIG. 1, an evaluation method according to this embodiment will be outlined. FIG. 1 is a schematic illustrating the evaluation method according to this embodiment. As illustrated in FIG. 1, a head 100 is mounted on a leading end portion of a robot 10 and performs laser welding on a workpiece W. A controller 20 controls motions of the head 100 and motions of the robot 10.

The head 100 illustrated in FIG. 1 includes a unit of galvanometer mirrors or any other mechanism capable of changing the direction of a laser beam. Specifically, the head 100 drives two mirrors swingable about different rotation axes to orient a laser beam in any desired directions. This enables the head 100 to draw any desired shape of radiation track P. For example, FIG. 1 illustrates a circular radiation track P.

The robot 10 is capable of moving the head 100 along a working line set on the workpiece W. As used herein, the term "working line" refers to an imaginary line set along extension directions in which a working region set on the workpiece W extends. An example (not illustrated) is that a spiral radiation track P is drawn on the workpiece W by moving the head 100 along the working line.

The controller 20 controls motions of the head 100 and motions of the robot 10. Specifically, the controller 20 outputs motion commands to the head 100 and the robot 10, and the head 100 and the robot 10 make motions based on the motion commands output from the controller 20.

Conventional welding state evaluation is performed by: detecting the intensity of an optical feedback of a laser beam returning from the workpiece W (examples of the optical feedback, which is also referred to as return light, include plasma light and infrared light); and analyzing time-series data (waveform data) of the intensity.

In the conventional welding state evaluation, however, the time-series data of the intensity of the optical feedback contains external disturbance noise such as welding fumes, spatter particles, and molten pool vibrations. This makes it necessary to exclude the external disturbance noise from the time-series data so as to obtain values for analysis purposes, and it is difficult to obtain these values accurately. Thus, this conventional evaluation method has room for improvement in evaluation accuracy.

In light of the considerations above, the evaluation method according to this embodiment uses a combination of time-series data of optical feedback intensity and laser track information to generate a spatial intensity distribution regarding an optical feedback 200, which returns from the workpiece W (this intensity distribution will be hereinafter referred to as "intensity distribution information"). Then, the evaluation method performs welding state evaluation based on the generated intensity distribution information.

First, the evaluation method according to this embodiment obtains track information showing a track of a laser target spot on the workpiece W to which a laser beam is radiated (step S01 in FIG. 1). The track information is information indicating changes over time in the laser target spot on the workpiece W to which a laser beam is radiated. The example illustrated in FIG. 1 is that the laser target spot on the workpiece W is represented in the form of a two-dimensional coordinate system defined by X coordinate and Y coordinate.

The track information may be obtained, for example, based on a motion command output from the controller 20. Another possible example is to obtain the track information based on an output from an image sensor that takes an image of the workpiece W.

Then, the evaluation method according to this embodiment detects intensity information showing, in a time-series order, intensities of the optical feedback 200 of the radiated laser beam (step S02 in FIG. 1). As used herein, the term "optical feedback" refers to light that is caused to occur by machining of the workpiece W using a laser beam. Specifically, the optical feedback contains at least one of reflection light of the laser beam, plasma light, and infrared light (plasma light and infrared light are caused to occur by the laser beam).

Next, the evaluation method according to this embodiment generates intensity distribution information based on the track information and the time-series intensity information (step S03 in FIG. 1). The intensity distribution information shows a distribution of the intensities over the workpiece W. Specifically, the intensity distribution information is image information made up of pixel values each corresponding to a different coordinate that is included in the coordinate system fixed to the workpiece W and that is assigned a different intensity of the optical feedback 200. The intensity distribution information is generated by correlating the track information and the time-series intensity information with each other based on time. The example intensity distribution information illustrated in FIG. 1 is an image that shows the intensities of the optical feedback 200 in the coordinates in grayscale.

Next, the evaluation method according to this embodiment analyzes the generated intensity distribution information to evaluate the welding state, which indicates how the workpiece W is welded by the laser beam. Specifically, an image of the intensity distribution information is subjected to image recognition and classified into a normal welding state or an abnormal welding state. When the welding state has been determined as abnormal, the type of the abnormal welding state is determined.

Thus, the evaluation method according to this embodiment evaluates the welding state of the workpiece W more spatially than when only waveform data, which is time-series data, is analyzed. When the workpiece W has a welding defect such as boring, the welding defect in many cases exists over a plurality of coordinates on the workpiece W. The evaluation method according to this embodiment, which evaluates the welding state spatially using the intensity distribution information, increases the accuracy of evaluation as to whether there is a welding defect, such as boring, on the workpiece W.

In the evaluation method according to this embodiment, it is possible to use machine learning to generate or update an evaluation standard on which the welding state evaluation using the intensity distribution information is based. Using machine learning ensures that an image of the intensity distribution information is classified based on the welding state at a higher level of accuracy, which will be described later.

### Configuration of Robot System

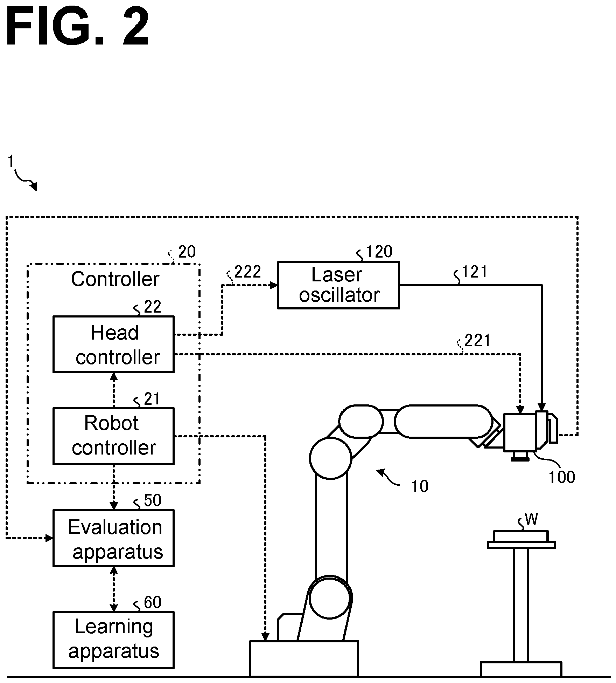

By referring to FIG. 2, description will be made with regard to a configuration of a robot system 1, which performs the evaluation method described above by referring to FIG. 1. FIG. 2 is a schematic illustrating an example configuration of the robot system 1.

As illustrated in FIG. 2, the robot system 1 includes the robot 10, the controller 20, an evaluation apparatus 50, a learning apparatus 60, the head 100, and a laser oscillator 120.

A non-limiting example of the robot 10 is a six-axis vertical multi-articular robot, and the head 100 is mounted on the leading end portion of the robot 10.

The controller 20 includes a robot controller 21 and a head controller 22. The robot controller 21 controls motions of the robot 10. The head controller 22 is a separate controller separate from the robot controller 21, and controls motions of the head 100. Specifically, the robot controller 21 obtains a setting value set for the head 100 from a terminal device connected to the robot controller 21 via a wire or wirelessly, generates a motion command for the head 100 based on the obtained setting value, and outputs the motion command to the head controller 22.

The setting value of the head 100 is information that defines the radiation track P in a coordinate system fixed to the head 100. When the robot 10 and the head 100 cooperate to perform laser welding, the position and orientation of the head 100 are subject to change by the robot 10. That is, the coordinate system fixed to the head 100 itself is movable. In this case, the robot controller 21 calculates the position and orientation of the head 100 based on a known posture of the robot 10. Then, based on the position and orientation that have been calculated, the robot controller 21 converts a coordinate point corresponding to the laser target spot specified by the setting value of the head 100 into a coordinate point corresponding to a relative laser target spot that is a laser target spot set with the movement of the robot 10 taken into consideration. Then, the robot controller 21 outputs to the head controller 22 a motion command that includes the coordinate point corresponding to the relative laser target spot.

The robot controller 21 also makes instructions, such as a laser intensity instruction, to the head controller 22.

The head controller 22 receives the motion command for the head 100 from the robot controller 21. Then, based on the motion command, the head controller 22 controls the mechanism (including galvanometer mirrors) of the head 100. Specifically, the head controller 22 is connected to the head 100 via a communication cable 221 and controls the drive shafts of the galvanometer mirrors by making communication with the head 100 via the communication cable 221, such as performing high speed serial communication and making a pulse width modulation (PWM) motor command. The head controller 22 is also connected to the laser oscillator 120 via a communication cable 222. The head controller 22, based on a command from the robot controller 21, transmits an analogue signal to the laser oscillator 120 via the communication cable 222. The analogue signal is a command that causes the laser oscillator 120 to adjust the laser intensity synchronously with a motion command for the head 100. The laser oscillator 120, based on the command from the head controller 22, adjusts the laser intensity and outputs a laser beam to the head 100 via an optical fiber 121.

While in this embodiment the robot controller 21 and the head controller 22 are separate from each other, it is possible to incorporate the functions of the head controller 22 in, for example, the robot controller 21.

The evaluation apparatus 50 generates intensity distribution information, and evaluates the welding state of the workpiece W based on the generated intensity distribution information. The evaluation apparatus 50 is connected to the robot controller 21 and the head 100. The evaluation apparatus 50 is also connected to the learning apparatus 60.

The learning apparatus 60 generates an evaluation standard using machine learning. The evaluation standard is used as a basis of evaluation of the welding state of the workpiece W based on the intensity distribution information.

While in FIG. 2 the evaluation apparatus 50 and the learning apparatus 60 are separate from each other, it is possible to incorporate the functions of the learning apparatus 60 in, for example, the evaluation apparatus 50.

The laser oscillator 120 outputs a laser beam to the head 100 via the optical fiber 121.

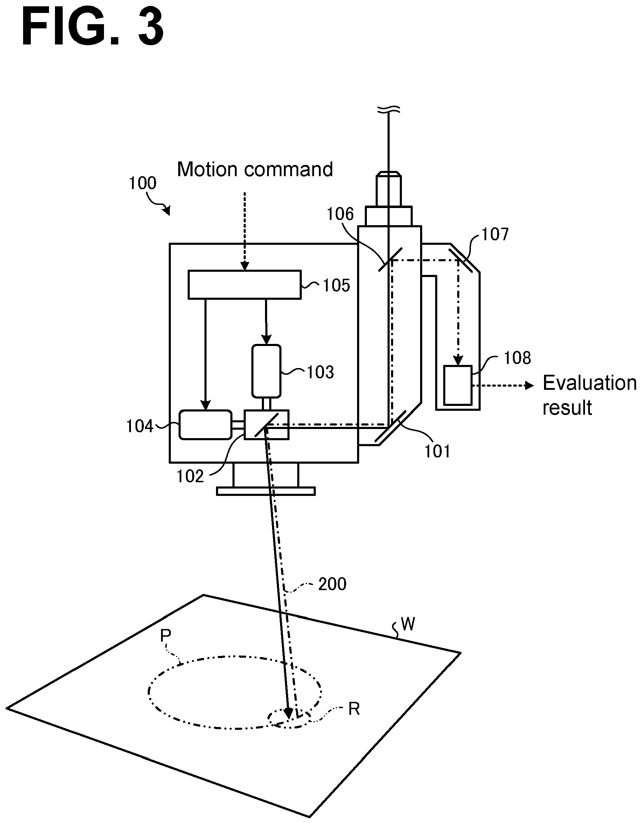

The head 100 changes the laser target spot based on a motion command from the head controller 22. By referring to FIG. 3, an example configuration of the head 100 will be described. FIG. 3 is a schematic illustrating an example configuration of the head 100. It is to be noted that the head 100 may include additional elements not illustrated in FIG. 3, examples including, but not limited to, a collimating lens and a light concentration lens. The collimating lens changes the laser beam into parallel rays of light after the laser beam has been diffused at one end of the optical fiber 121. The light concentration lens concentrates the parallel rays of light on the machined surface of the workpiece W.

As illustrated in FIG. 3, the head 100 includes a first incident mirror 101, a mirror device 102, a first driver 103, a second driver 104, and a drive controller 105. The head 100 also includes a half mirror 106, a second incident mirror 107, and an intensity sensor 108.

The first incident mirror 101 receives a laser beam entering the head 100 via the optical fiber 121, and reflects the laser beam into the mirror device 102.

The mirror device 102 includes a first galvanometer mirror and a second galvanometer mirror. The first driver 103 makes the first galvanometer mirror swing about X axis. The second driver 104 makes the second galvanometer mirror rotate about Y axis. The drive controller 105 controls motions of the first driver 103 and the second driver 104 based on a motion command input from the head controller 22.

By driving the mirror device 102 using the first driver 103 and the second driver 104 in the above manner, the head 100 changes the laser beam direction. This enables the head 100 to draw, on the workpiece W, a radiation track P having a shape that is based on a motion command.

After the laser beam from the laser oscillator 120 has entered the head 100, the half mirror 106 allows the laser beam to pass through the half mirror 106 while at the same time reflecting the optical feedback 200 into the second incident mirror 107. The second incident mirror 107 reflects the optical feedback 200 into the intensity sensor 108.

The intensity sensor 108 receives the optical feedback 200 and detects the intensity of the optical feedback 200. Then, the intensity sensor 108 outputs the detected intensity to the evaluation apparatus 50.

As described later, the optical feedback 200 comes not only from one point on the laser target spot but also from a vicinity region R, which is a region centered around the laser target spot.

### Configuration of Evaluation Apparatus 50 and Configuration of Learning Apparatus 60

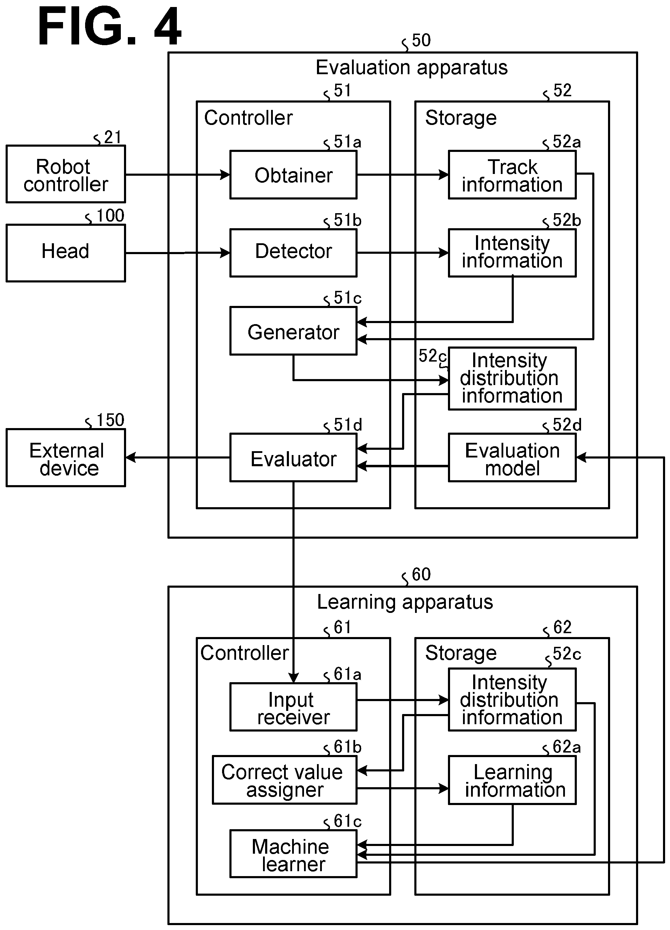

By referring to FIG. 4, an example configuration of the evaluation apparatus 50 and an example configuration of the learning apparatus 60 will be described. FIG. 4 is a block diagram illustrating an example configuration of the evaluation apparatus 50 and an example configuration of the learning apparatus 60.

An example configuration of the evaluation apparatus 50 will be described first. As illustrated in FIG. 4, the evaluation apparatus 50 includes a controller 51 and a storage 52. The controller 51 includes an obtainer 51a, a detector 51b, a generator 51c, and an evaluator 51d. The storage 52 stores track information 52a, intensity information 52b, intensity distribution information 52c, and an evaluation model 52d.

The evaluation apparatus 50 includes a computer and various circuits. The computer includes a central processing unit (CPU), a read only memory (ROM), a random access memory (RAM), a hard disk drive (HDD), and input-output ports.

The CPU of the computer reads an evaluation program stored in the ROM and executes the evaluation program to serve the functions of the obtainer 51a, the detector 51b, the generator 51c, and the evaluator 51d of the controller 51. It is to be noted that at least one or all of the obtainer 51a, the detector 51b, the generator 51c, and the evaluator 51d may be implemented by hardware such as Application Specific Integrated Circuit (ASIC), Graphics Processing Unit (GPU), and Field Programmable Gate Array (FPGA).

The storage 52 corresponds to the RAM and/or the HDD. The RAM and the HDD are capable of storing the track information 52a, the intensity information 52b, the intensity distribution information 52c, and the evaluation model 52d. It is to be noted that the evaluation apparatus 50 may obtain the above-described program and various kinds of information from another computer connected to the evaluation apparatus 50 through a wired or wireless network or from a portable recording medium.

The obtainer 51a obtains from the robot controller 21 a motion command for the robot 10 and the head 100, and generates the track information 52a based on the obtained motion command.

Specifically, based on the motion command for the robot 10, the obtainer 51a converts relative laser target spot information included in the motion command for the head 100 into laser target spot information in the coordinate system fixed to the workpiece W. Then, the obtainer 51a generates the track information 52a by correlating the obtained laser target spot information with, for example, the time at which the motion command was obtained. Then, the obtainer 51a stores the generated track information 52a in the storage 52.

From the intensity sensor 108 of the head 100 (see FIG. 3), the detector 51b obtains the intensity of the optical feedback 200 detected by the intensity sensor 108, and generates the intensity information 52b by correlating the intensity of the optical feedback 200 with, for example, the time at which the intensity was obtained. Then, the detector 51b stores the generated intensity information 52b in the storage 52.

The generator 51c generates the intensity distribution information 52c by correlating the track information 52a and the intensity information 52b with each other based on time. As described above, the intensity distribution information 52c is image information made up of pixel values each corresponding to a different coordinate that is included in the coordinate system fixed to the workpiece W and that is assigned a different intensity of the optical feedback 200.

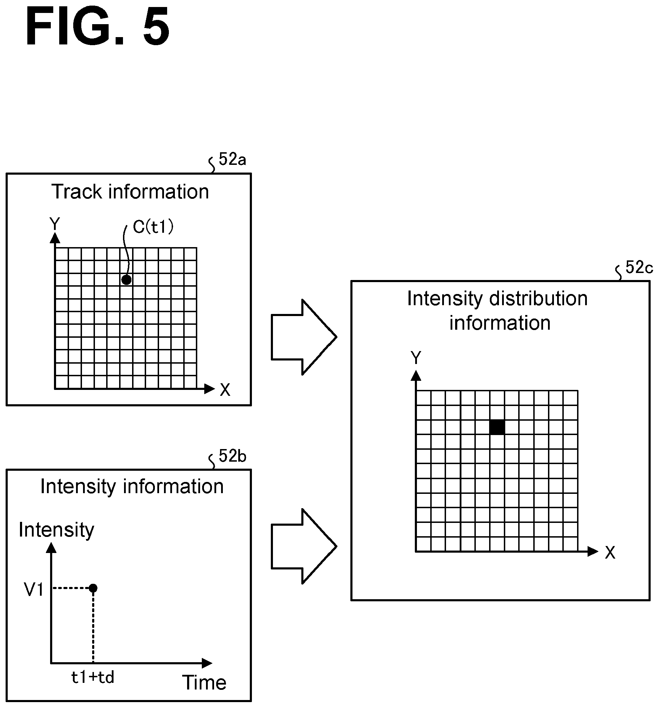

By referring to FIG. 5, an example processing of generating the intensity distribution information 52c will be described. FIG. 5 illustrates an example processing of generating the intensity distribution information 52c.

There is a time lag between the timing at which a laser beam is radiated to the workpiece W and the timing at which the optical feedback 200 of the laser beam is detected. The generator 51c, therefore, may take the time lag into consideration when the generator 51c correlates the track information 52a and the intensity information 52b with each other based on time.

Specifically, as illustrated in FIG. 5, a period of time corresponding to the time lag will be referred to as "*td*". In this case, the generator 51c correlates the coordinate point C (*t1*) with intensity *V1.* The coordinate point C is the laser target spot at time *t1* in the track information 52a. The intensity *V1* is the intensity of the optical feedback 200 at time *t1* + *td* in the intensity information 52b. In this manner, the generator 51c generates such intensity distribution information 52c that the intensity *V1* at time *t1* + *td* has a pixel value assigned to the pixel corresponding to the coordinate point C (*t1*)*.*

Thus, when the generator 51c generates the intensity distribution information 52c, the generator 51c may correlate the track information 52a as of a time point (first time point) with the intensity information 52b as of a time point (second time point) that is behind the first time point. This ensures that more accurate intensity distribution information is obtained.

Referring again to FIG. 4, the evaluator 51d will be described. The evaluator 51d evaluates the welding state of the workpiece W based on the intensity distribution information 52c and the evaluation model 52d stored in the storage 52. Specifically, the evaluator 51d determines whether the welding state is a normal welding state or an abnormal welding state.

When the welding state is an abnormal welding state, the evaluator 51d determines the type of the abnormal welding state. Examples of the type of the abnormal welding state include, but are not limited to, "boring", "burning-through", "bead meandering", and "bead shape irregularity". "Boring" refers to a state in which there is a hole penetrating the workpiece W. "Burning-through" refers to a state in which a joining piece (base material piece) of the workpiece W is melted away from the welding bead. "Bead meandering" refers to a state in which the welding bead meanders laterally relative to the radiation track P. "Bead shape irregularity" refers to a state in which the shape of the welding bead has a particularly distinctive part (a partial distinctiveness such as in bead width and extra-banking height).

The evaluator 51d, based on the evaluation model 52d stored in the storage 52, classifies an image of the intensity distribution information 52c on a welding state basis. Specifically, the evaluator 51d classifies an image of the intensity distribution information 52c as a normal welding state or an abnormal welding state. Upon determining that the image is an abnormal welding state, the evaluator 51d classifies the type of the abnormal welding state. A non-limiting example of the evaluation model 52d is a calculation model used in the above-described image recognition processing, that is, a calculation model used to classify an image as a normal welding state or an abnormal welding state. The evaluation model 52d is generated by the learning apparatus 60, described later.

The evaluator 51d outputs the intensity distribution information 52c and the evaluated welding state to, for example, an external device 150, which is connected to the evaluation apparatus 50. The evaluator 51d also outputs the intensity distribution information 52c to the learning apparatus 60.

An example configuration of the learning apparatus 60 will be described. The learning apparatus 60 includes a controller 61 and a storage 62. The controller 61 includes an input receiver 61a, a correct value assigner 61b, and a machine learner 61c. The storage 62 stores the intensity distribution information 52c and learning information 62a.

The learning apparatus 60 includes a computer and various circuits. The computer includes, for example, CPU, ROM, RAM, HDD, and input/output ports. The CPU of the computer reads an evaluation program stored in the ROM and executes the evaluation program to serve the functions of the input receiver 61a, the correct value assigner 61b, and the machine learner 61c of the controller 61.

The storage 62 corresponds to the RAM and/or the HDD. The RAM and the HDD are capable of storing the intensity distribution information 52c and the learning information 62a. It is to be noted that the learning apparatus 60 may obtain the above-described programs and various kinds of information from another computer connected to the learning apparatus 60 through a wired or wireless network or from a portable recording medium.

The input receiver 61a obtains the intensity distribution information 52c from the evaluation apparatus 50 and stores the intensity distribution information 52c in the storage 62.

The correct value assigner 61b obtains the intensity distribution information 52c from the storage 62; obtains a correct value corresponding to the classified or evaluated welding state corresponding to the intensity distribution information 52c; and assigns the correct value to the intensity distribution information 52c. In this manner, the correct value assigner 61b selects or generates information serving as the learning information 62a (training data). Then, the correct value assigner 61b stores the information in the storage 62.

A non-limiting example of the correct value obtained by the correct value assigner 61b is an evaluation performed by a human worker who actually saw the intensity distribution information 52c or the welded part of interest. In this case, the correct value assigner 61b obtains the correct value input by the worker through an input device, such as a keyboard, connected to the learning apparatus 60. Alternatively, the correct value assigner 61b may obtain the correct value through a network such as the Internet.

While in this embodiment the correct value assigner 61b has been described as obtaining the intensity distribution information 52c from the evaluation apparatus 50 and generating the learning information 62a, the correct value assigner 61b may obtain external, correct value data that correlates the intensity distribution information 52c with a correct value.

The machine learner 61c generates an evaluation model by performing machine learning (specifically, supervised learning) using the learning information 62a stored in the storage 62. Using the generated evaluation model, the machine learner 61c updates the evaluation model 52d stored in the storage 52 of the evaluation apparatus 50. In other words, the machine learner 61c updates the parameter(s) of the evaluation model 52d stored in the storage 52.

The evaluation model 52d may be generated using various techniques known in the machine learning art. Examples of the techniques include, but are not limited to, various deep learning techniques such as CNN (Convolutional Neural Network) and RNN (Recurrent Neural Network). Another non-limiting example technique is SVM (Support Vector Machine). It is to be noted that these techniques have been provided for exemplary purposes, and it is possible to select any other learning technique suitable for the information sought to be obtained in generating the evaluation model 52d.

While in this embodiment the learning apparatus 60 has been described as performing supervised learning, the machine learning performed by the learning apparatus 60 may be unsupervised learning. Specifically, the machine learner 61c may perform, instead of supervised learning using the learning information 62a, unsupervised learning to extract a characteristic(s) of the welding state from the intensity distribution information 52c stored in the storage 62. The unsupervised learning may be performed using any technique known in the art, examples including, but not limited to, cluster analysis and base analysis.

### Procedure for Processing Performed by Evaluation Apparatus 50

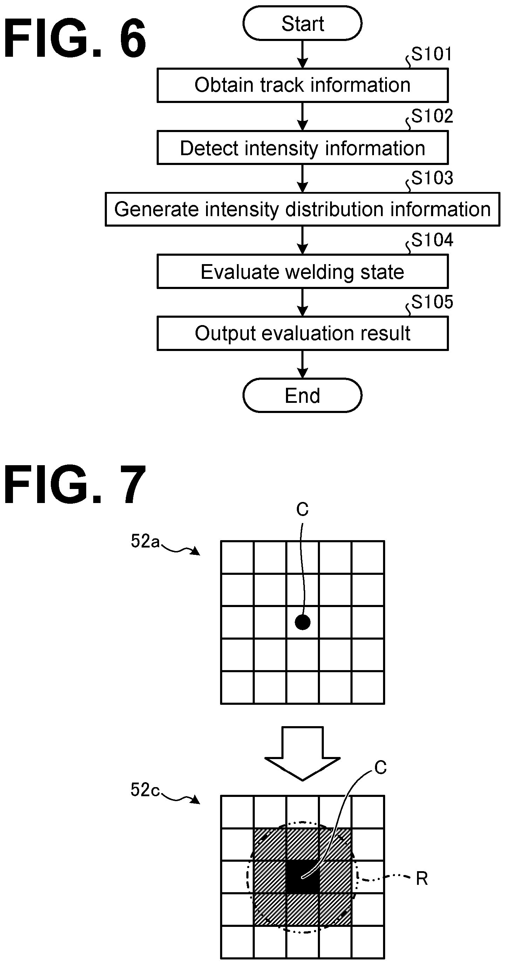

By referring to FIG. 6, a procedure for processing performed by the evaluation apparatus 50 will be described. FIG. 6 is a flowchart of a procedure for processing performed by the evaluation apparatus 50.

As illustrated in FIG. 6, the evaluation apparatus 50 obtains the track information 52a based on a motion command input from the robot controller 21 (step S101). Also, based on the intensity of the optical feedback 200 detected by and input from the head 100, the evaluation apparatus 50 detects the intensity information 52b, which shows intensities of the optical feedback 200 in a time-series order (step S 102). Then, the evaluation apparatus 50 generates the intensity distribution information 52c by correlating the track information 52a and the intensity information 52b with each other based on time (step S 103). Then, the evaluation apparatus 50 evaluates the welding state of the workpiece W based on the generated intensity distribution information 52c (step S 104). Then, the evaluation apparatus 50 outputs the evaluated welding state to, for example, the external device 150 (step S 105). First Modification

FIG. 7 illustrates processing of generating intensity distribution information according to the first modification. As described above, the optical feedback 200 comes not only from the laser target spot but also from the vicinity region R (see FIG. 3), which is centered around the laser target spot. The optical feedback 200 from the vicinity region R is represented by, for example: plasma light occurring in the machining process using the radiated laser; laser beams from fumes; and heat rays from a laser melted portion of the workpiece W surface. Thus, the optical feedback 200 can be regarded as including information about the vicinity region R.

Under the circumstances, the generator 51c may correlate the track information 52a and the intensity information 52b with each other in the manner illustrated in FIG. 7. Specifically, the generator 51c may correlate an intensity of the optical feedback 200 with the coordinate point C, which corresponds to the laser target spot, and correlate an intensity of the optical feedback 200 with each of a plurality of coordinate points around the coordinate point C. More specifically, the generator 51c may generate such intensity distribution information 52c that the intensity of the optical feedback 200 is represented by a pixel value assigned to the pixel corresponding to the coordinate point C and pixel values assigned to the pixels surrounding the pixel. In this respect, the generator 51c may correlate the intensity of the optical feedback 200 corresponding to the coordinate point C with the plurality of pixels around the coordinate point C without making any changes to the intensity. Alternatively, the generator 51c may multiply the optical feedback 200 corresponding to the coordinate point C by a coefficient (a positive number less than 1), and correlate the obtained product with the plurality of pixels around the coordinate point C.

Thus, an intensity of the optical feedback 200 is correlated with the plurality of coordinate points included in the region centered around the laser target spot. This ensures that obtained intensity distribution information 52c is closer to an actual welding state. Second Modification

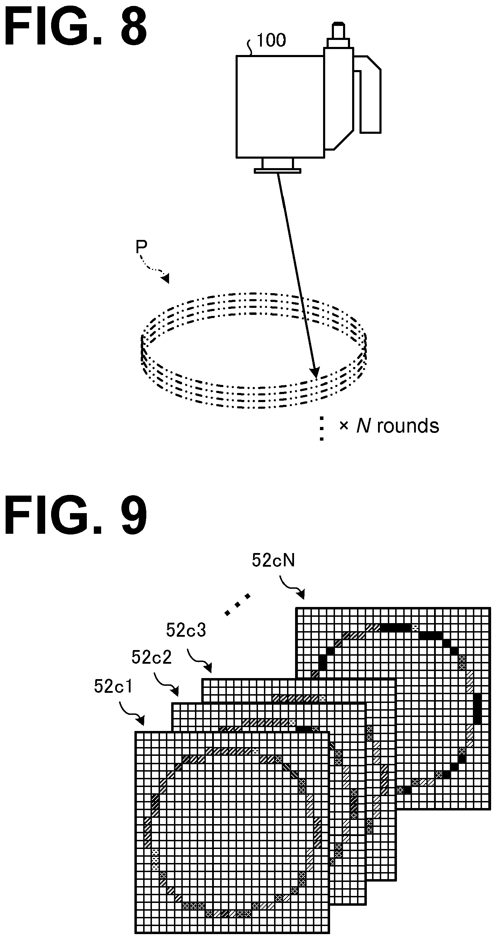

FIGs. 8 and 9 illustrate processing of generating the intensity distribution information 52c according to the second modification. As illustrated in FIG. 8, the robot system 1 may cause the head 100 to draw a radiation track P formed by making more than one round of laser radiation along an identical closed loop (the identical closed loop is a non-limiting example of the identical path recited in the appended claims). In the example illustrated in FIG. 8, the radiation track P is formed by making N rounds of laser radiation along a circular closed loop.

In this case, the generator 51c may generate intensity distribution information for each one round of laser radiation, as indicated by 52c1 to 52c*N* in FIG. 9. Specifically, the generator 51c generates the intensity distribution information 52c1, which corresponds to the first round of laser radiation, based on the track information 52a corresponding to the first round of laser radiation and the intensity information 52b corresponding to the first round of laser radiation. The generator 51c, through a similar procedure, generates the rest of the intensity distribution information, namely, the intensity distribution information 52c2, which corresponds to the second round of laser radiation, to the intensity distribution information 52cN, which corresponds to the *N*-th round of laser radiation.

When the evaluator 51d generates the pieces of intensity distribution information 52c1 to 52c*N* (each corresponding to a different one round of laser radiation), the evaluator 51d may evaluate the welding state based on a difference between the pieces of intensity distribution information 52c1 to 52c*N* (each corresponding to a different closed loop) such that the pieces of intensity distribution information 52c1 to 52c*N* are arranged in a time-series order.

Specifically, the evaluator 51d may compare two pieces of intensity distribution information that are next to each other in a time-series order. For example, the evaluator 51d may compare the intensity distribution information 52c1, which corresponds to the first round of laser radiation, with the intensity distribution information 52c2, which corresponds to the second round of laser radiation. By making this comparison, the evaluator 51d determines whether there is a region where the decreasing rate of the intensity of the optical feedback 200 is in excess of a threshold. When there is a region where the decreasing rate of the intensity of the optical feedback 200 is in excess of a threshold, the evaluator 51d determines that the region has the abnormality "boring". It is to be noted that this region may be made up of a single pixel or a plurality of adjacent pixels.

Thus, a change over time is used as a subject of evaluation, which increases the level of the accuracy with which the welding state is evaluated. This configuration also ensures that if an abnormality has occurred, it is possible to identify the number of the closed loop (in the time-series order) in which the abnormality occurred.

The evaluator 51d may also evaluate the welding state based on information obtained by superposing the pieces of intensity distribution information 52c1 to 52c*N* (each corresponding to a different closed loop).

Specifically, the evaluator 51d may generate average intensity distribution information by calculating an average of the pieces of intensity distribution information 52c1 to 52c*N*; and evaluate the welding state based on the average intensity distribution information that has been generated. This configuration reduces external disturbance noise caused by, for example, fumes, increasing the accuracy of welding state evaluation. It is to be noted that the evaluator 51d may calculate a weight average of the pieces of intensity distribution information 52c1 to 52c*N* by more heavily weighting a newer piece of intensity distribution information in a time-series order.

The evaluator 51d may also generate summation intensity distribution information by calculating a sum of the pieces of intensity distribution information 52c1 to 52c*N*; and evaluate the welding state based on the summation intensity distribution information that has been generated. The summation intensity distribution information is closer to the total amount of heat applied to the weld portions of the workpiece W. Using such intensity distribution information, therefore, increases the accuracy of welding state evaluation.

The evaluator 51d may also evaluate the welding state based on one or some of the pieces of intensity distribution information 52c1 to 52c*N*. For example, the evaluator 51d may evaluate the welding state based solely on the final intensity distribution information (namely, the intensity distribution information 52c*N*, which corresponds to the N-th round of laser radiation). Thus, the evaluator 51d may evaluate the welding state based on at least one piece of intensity distribution information, among a plurality of pieces of intensity distribution information corresponding to a plurality of rounds of laser radiation along an identical path.

It is to be noted that the evaluator 51d may generate an animation image by arranging the pieces of intensity distribution information 52c1 to 52c*N* in a time-series order to dynamically show a change over time in the intensity distribution; and output the animation image to the external device 150 or some other device.

Thus, when the track information 52a shows more than one round of laser radiation along an identical closed loop, the generator 51c may generate the intensity distribution information 52c1 to 52c*N* (each corresponding to a different round of laser radiation). In this case, the evaluator 51d may evaluate the welding state based on the intensity distribution information 52c1 to 52c*N.*

As used herein, the term "identical closed loop" refers to a closed loop that is precisely or approximately the same in shape and size. If a laser beam has drawn a plurality of concentric closed loops (such as a concentric double circle), the radiation track P includes a plurality of different closed loops. These different-size closed loops are not regarded as identical closed loops.

While in the above-described embodiment and modification the radiation track P drawn has been described as a closed loop, the radiation track P, which is formed by following an identical path(s), may not necessarily be a closed loop. Other examples include, but are not limited to, a zigzag-shaped track, an S-shaped track, and a C-shaped track.

### Third Modification

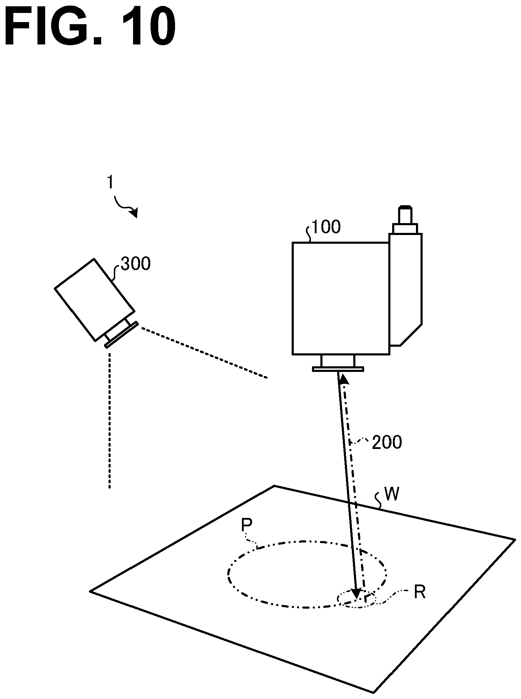

FIG. 10 illustrates processing of obtaining the track information 52a according to the third modification. As illustrated in FIG. 10, the robot system 1 may include an image taking device 300. The image taking device 300 includes an image sensor provided in the image taking device 300 (such as CCD (Charge Coupled Device) and CIS (CMOS Image Sensor)). Using the image sensor, the image taking device 300 takes an image, and outputs the image to the evaluation apparatus 50. Specifically, the image taking device 300 takes an image of the machined surface of the workpiece W. More specifically, the image taking device 300 takes an image of a track of a laser beam actually drawn on the workpiece W.

In this case, the obtainer 51a of the evaluation apparatus 50 may obtain the image output from the image taking device 300 and generate the track information 52a based on the obtained image.

Thus, the obtainer 51a may obtain the track information 52a not based on a motion command for the robot 10 and/or the head 100 but based on an image of the workpiece W taken by an image sensor. This makes the track information 52a closer to an actual track drawn on the workpiece W than when the track information 52a is obtained based on a motion command.

The evaluation apparatus 50 according to the above-described embodiment includes the obtainer 51a, the detector 51b, the generator 51c, and the evaluator 51d. The obtainer 51a obtains the track information 52a, which is regarding a laser target spot on the workpiece W to which a laser beam is radiated. The detector 51b detects the intensity information 52b, which shows intensities of the optical feedback 200 (of the laser beam from the workpiece W) in a time-series order. The generator 51c generates the intensity distribution information 52c. The intensity distribution information 52c shows a distribution of the intensities over the workpiece W and correlates the track information 52a and the intensity information 52b with each other based on time. The evaluator 51d evaluates a welding state (which indicates how the workpiece W is welded by the laser beam) based on the intensity distribution information 52c.

Thus, the intensity information 52b, which is time-series information, is combined with the track information 52a, which is spatial information. Using this combination ensures that a welding defect associated with shape, such as boring, is evaluated spatially. As a result, the welding state is evaluated at a higher level of accuracy.

The obtainer 51a may obtain the track information 52a based on a motion command from the robot controller 21 and/or the head controller 22 (which are non-limiting examples of the controller recited in the claims). The head controller 22 controls motions of the head 100, which is capable of change the shape of the radiation track P (the head 100 is a non-limiting example of the laser head recited in the claims). The robot controller 21 controls motions of the robot 10, which moves the head 100 relative to the workpiece W. By obtaining the track information 52a based on a motion command, spatial track information is obtained at a higher level of accuracy and a lower level of processing load.

The obtainer 51a may obtain the track information 52a based on an image of the workpiece W taken by the image taking device 300 (which is a non-limiting example of the image sensor recited in the claims).

When the track information 52a shows that the radiation track of the laser beam is formed by more than one round of laser radiation along an identical closed loop (which is a non-limiting example of the identical path recited in the appended claims), the generator 51c may generate the intensity distribution information 52c1 to 52c*N* (each corresponding to a different round of laser radiation). In this case, the evaluator 51d may evaluate the welding state based on the pieces of intensity distribution information 52c1 to 52c*N* (each corresponding to a different closed loop). Thus, when the radiation track of a laser beam is formed by more than one round of laser radiation, the welding state is evaluated based on an intensity distribution corresponding to each one round of laser radiation. That is, a larger number of pieces of information are input for evaluation purposes, resulting in an increased level of evaluation accuracy.

The evaluator 51d may evaluate the welding state based on an average or a sum of the pieces of intensity distribution information 52c1 to 52c*N* (each corresponding to a different closed loop, which is a non-limiting example of the identical path recited in the appended claims). This ensures that the welding state is evaluated at a lower level of processing load.

The evaluator 51d may evaluate the welding state based on a difference between the pieces of intensity distribution information 52c1 to 52c*N* (each corresponding to a different closed loop, which is a non-limiting example of the identical path recited in the appended claims) such that the pieces of intensity distribution information 52c1 to 52c*N* are arranged in a time-series order. Thus, a change over time is used as a subject of evaluation, which increases the level of the accuracy with which the welding state is evaluated.

The evaluator 51d may determine, based on the intensity distribution information 52c, whether the welding state is a normal welding state or an abnormal welding state. When the welding state is an abnormal welding state, the evaluator 51d may determine the type of the abnormal welding state. Thus, the evaluator 51d performs an evaluation as to not only whether the welding state is a normal welding state or an abnormal welding state but also as to, when the welding state is the abnormal welding state, the type of the abnormal welding state. This ensures that a user is provided with a more detailed evaluation.

The evaluation method according to the above-described embodiment includes an obtaining step, a detecting step, a generating step, and an evaluating step. In the obtaining step, the track information 52a is obtained. The track information 52a is regarding a laser target spot on the workpiece W to which a laser beam is radiated. In the detecting step, the intensity information 52b is detected. The intensity information 52b shows, in a time-series order, intensities of the optical feedback 200 of the laser beam returning from the workpiece W. In the generating step, the intensity distribution information 52c is generated. The intensity distribution information 52c shows a distribution of the intensities over the workpiece W and correlates the track information 52a and the intensity information 52b with each other based on time. In the evaluating step, the welding state is evaluated based on the intensity distribution information 52c.

Thus, the intensity information 52b, which is time-series information, is combined with the track information 52a, which is spatial information. Using this combination ensures that a welding defect associated with shape, such as boring, is evaluated spatially. As a result, the welding state is evaluated at a higher level of accuracy.

The robot system 1 according to the above-described embodiment (which is a non-limiting example of the evaluation system recited in the claims) includes the head 100, the robot 10, the robot controller 21 (which is a non-limiting example of the controller recited in the claims), the head controller 22 (which is a non-limiting example of the controller recited in the claims), and the evaluation apparatus 50. The head 100 is capable of changing the shape of the radiation track P on the workpiece W. The robot 10 moves the head 100 relative to the workpiece W. The head controller 22 controls motions of the head 100, and the robot controller 21 controls motions of the robot 10. The evaluation apparatus 50 evaluates a welding state indicating how the workpiece W is welded by a laser beam. The evaluation apparatus 50 includes the obtainer 51a, the detector 51b, the generator 51c, and the evaluator 51d. The track information 52a is regarding a laser target spot on the workpiece W to which the laser beam is radiated. The detector 51b detects the intensity information 52b, which shows intensities of the optical feedback 200 (of the laser beam from the workpiece W) in a time-series order. The generator 51c generates the intensity distribution information 52c. The intensity distribution information 52c shows a distribution of the intensities over the workpiece W and correlates the track information 52a and the intensity information 52b with each other based on time. The evaluator 51d evaluates the welding state based on the intensity distribution information 52c.

Thus, the intensity information 52b, which is time-series information, is combined with the track information 52a, which is spatial information. Using this combination ensures that a welding defect associated with shape, such as boring, is evaluated spatially. As a result, the welding state is evaluated at a higher level of accuracy.

The robot system 1 according to the above-described embodiment may include the machine learner 61c. The machine learner 61c receives the intensity distribution information 52c and training data generated or selected based on the received intensity distribution information 52c and based on a correct value that corresponds to the evaluated welding state and that is assigned to the received intensity distribution information 52c; performs supervised learning using the training data; and generates the evaluation model 52d (which is a non-limiting example of the calculation model recited in the claims) based on the supervised learning. The evaluation model 52d is used by the evaluator 51d to evaluate the welding state upon receipt of another piece of intensity distribution information 52c. This enables the evaluator 51d to evaluate the welding state using the evaluation model 52d at a higher level of accuracy.

The machine learner 61c may receive the intensity distribution information 52c; perform unsupervised learning using the intensity distribution information 52c; and generate a calculation model used by the evaluator 51d to evaluate the welding state upon receipt of another piece of intensity distribution information 52c.

The evaluator 51d may evaluate the welding state based on the evaluation model 52d generated or updated by the machine learner 61c. Thus, the evaluation model 52d may be obtained by machine learning, and using such evaluation model 52d increases the accuracy of welding state evaluation.

The evaluation program according to the above-described embodiment includes an obtaining step, a detecting step, a generating step, and an evaluating step. In the obtaining step, the track information 52a is obtained. The track information 52a is regarding a laser target spot on the workpiece W to which a laser beam is radiated. In the detecting step, the intensity information 52b is detected. The intensity information 52b shows, in a time-series order, intensities of the optical feedback 200 of the laser beam returning from the workpiece W. In the generating step, the intensity distribution information 52c is generated. The intensity distribution information 52c shows a distribution of the intensities over the workpiece W and correlates the track information 52a and the intensity information 52b with each other based on time. In the evaluating step, the welding state is evaluated based on the intensity distribution information 52c.

Thus, the intensity information 52b, which is time-series information, is combined with the track information 52a, which is spatial information. Using this combination ensures that a welding defect associated with shape, such as boring, is evaluated spatially. As a result, the welding state is evaluated at a higher level of accuracy.

Obviously, numerous modifications and variations of the present invention are possible in light of the above teachings. It is therefore to be understood that within the scope of the claims, the present invention may be practiced otherwise than as specifically described herein.

- P: Radiation track
- R: Vicinity region
- W: Workpiece
- 1: Robot system
- 10: Robot
- 20: Controller
- 21: Robot controller
- 22: Head controller
- 50: Evaluation apparatus
- 51: Controller
- 51a: Obtainer
- 51b: Detector
- 51c: Generator
- 51d: Evaluator
- 52: Storage
- 52a: Track information
- 52b: Intensity information
- 52c: Intensity distribution information
- 52d: Evaluation model
- 60: Learning device
- 61: Controller
- 61a: Input receiver
- 61b: Correct value assigner
- 61c: Machine learner
- 62: Storage
- 62a: Learning information
- 100: Head
- 200: Optical feedback

## Claims

1. An evaluation apparatus (50), comprising:
an obtainer (5 1a) configured to obtain track information showing a track of a laser target spot made by a laser beam on a workpiece;
a detector (51b) configured to detect intensity information showing, in a time-series order, intensities of an optical feedback of the laser beam returning from the workpiece;
a generator (51c) configured to correlate the track information and the intensity information with each other based on time so as to generate intensity distribution information showing a distribution of the intensities over the workpiece; and
an evaluator (51d) configured to evaluate, based on the intensity distribution information, a welding state indicating how the workpiece is welded by the laser beam.

2. The evaluation apparatus (50) according to claim 1, wherein the obtainer (51a) is configured to obtain the track information based on a motion command from a controller that is configured to:
control a motion of a laser head configured to change a shape of the track of the laser target spot; and
control a motion of a robot configured to move the laser head relative to the workpiece.

3. The evaluation apparatus (50) according to claim 1, wherein the obtainer (51a) is configured to obtain the track information based on an image of the workpiece taken by an image sensor.

4. The evaluation apparatus (50) according to any one of claims 1 to 3,
wherein the generator (51c) is configured, such that, when the track information shows that the track of the laser target spot is formed by more than one round of laser radiation along an identical path, the generator (51c) generates a plurality of pieces of intensity distribution information each corresponding to one of the more than one round of laser radiation, and
wherein the evaluator (51d) is configured to evaluate the welding state based on at least one of the plurality of pieces of intensity distribution information.

5. The evaluation apparatus (50) according to claim 4, wherein the evaluator (51d) is configured to evaluate the welding state based on an average or a sum of the plurality of pieces of intensity distribution information.

6. The evaluation apparatus (50) according to claim 4,
wherein the plurality of pieces of intensity distribution information are arranged in the time-series order, and
wherein the evaluator (51d) is configured to evaluate the welding state based on a difference between the plurality of pieces of intensity distribution information arranged in the time-series order.

7. The evaluation apparatus (50) according to any one of claims 1 to 6,
wherein the evaluator (51d) is configured to determine, based on the intensity distribution information, whether the welding state is a normal welding state or an abnormal welding state, and
wherein when the welding state is the abnormal welding state, the evaluator (51d) is configured to determine a type of the abnormal welding state.

8. An evaluation method, comprising:
obtaining track information showing a track of a laser target spot made by a laser beam on a workpiece;
detecting intensity information showing, in a time-series order, intensities of an optical feedback of the laser beam returning from the workpiece;
correlating the track information and the intensity information with each other based on time so as to generate intensity distribution information showing a distribution of the intensities over the workpiece; and
evaluating, based on the intensity distribution information, a welding state indicating how the workpiece is welded by the laser beam.

9. An evaluation system (1), comprising:
a laser head (100) configured to change a shape of a track of a laser target spot made by a laser beam on a workpiece;
a robot (10) configured to move the laser head (100) relative to the workpiece;
a controller (20) configured to control a motion of the laser head (100) and a motion of the robot (10); and
an evaluation apparatus (50) according to claim 1 being configured to evaluate a welding state indicating how the workpiece is welded by the laser beam, wherein the obtainer (51a) is configured to obtain, from the controller (20), the track information showing the track of the laser target spot.

10. The evaluation system (1) according to claim 9, further comprising:
a machine learner (61c) configured to:
obtain the intensity distribution information;
obtain training data generated or selected based on the intensity distribution information and based on a correct value of the welding state evaluated by the evaluator (51d), the correct value being assigned to the intensity distribution information;
perform supervised learning using the training data; and
generate, based on the supervised learning, a calculation model used by the evaluator (51d) to evaluate the welding state upon receipt of another piece of intensity distribution information.

11. The evaluation system (1) according to claim 9, further comprising:
a machine learner (61c) configured to:
obtain the intensity distribution information;
perform unsupervised learning using the intensity distribution information; and
generate, based on the unsupervised learning, a calculation model used by the evaluator (51d) to evaluate the welding state upon receipt of another piece of intensity distribution information.

12. The evaluation system (1) according to claim 10 or 11, wherein the evaluator (51d) is configured to evaluate the welding state based on the calculation model generated or updated by the machine learner (61c).

13. An evaluation program comprising instructions to cause the evaluation apparatus according to claim 1 to execute the following steps:
obtaining track information showing a track of a laser target spot made by a laser beam on a workpiece;
detecting intensity information showing, in a time-series order, intensities of an optical feedback of the laser beam returning from the workpiece;
correlating the track information and the intensity information with each other based on time so as to generate intensity distribution information showing a distribution of the intensities over the workpiece; and
evaluating, based on the intensity distribution information, a welding state indicating how the workpiece is welded by the laser beam.

## Patentansprüche

1. Evaluierungsvorrichtung (50), aufweisend:
eine Erhaltungsvorrichtung (51a), die konfiguriert ist, um Spurinformationen zu erhalten, die eine Spur eines von einem Laserstrahl auf einem Werkstück erzeugten Laserzielpunkts zeigen,
einen Detektor (51b), der konfiguriert ist, um Intensitätsinformationen zu detektieren, die in einer Zeitreihen-Reihenfolge Intensitäten einer optischen Rückkopplung des Laserstrahls zeigen, der von dem Werkstück zurückkehrt,
einen Generator (51c), der konfiguriert ist, um die Spurinformationen und die Intensitätsinformationen auf der Grundlage von Zeit miteinander zu korrelieren, um Intensitätsverteilungsinformationen zu erzeugen, die eine Verteilung der Intensitäten über das Werkstück zeigen, und
eine Evaluierungseinrichtung (51d), die konfiguriert ist, um auf der Grundlage der Intensitätsverteilungsinformationen einen Schweißzustand zu evaluieren, der angibt, wie das Werkstück durch den Laserstrahl geschweißt wird.

2. Evaluierungsvorrichtung (50) gemäß Anspruch 1, wobei die Erhaltungsvorrichtung (51a) konfiguriert ist, um die Spurinformationen auf der Grundlage eines Bewegungsbefehls von einem Controller zu erhalten, der konfiguriert ist zum:
Steuern einer Bewegung eines Laserkopfes, der konfiguriert ist, um eine Form der Spur des Laserzielpunkts zu ändern, und
Steuern einer Bewegung eines Roboters, der konfiguriert ist, um den Laserkopf relativ zu dem Werkstück zu bewegen.

3. Evaluierungsvorrichtung (50) gemäß Anspruch 1, wobei die Erhaltungsvorrichtung (51a) konfiguriert ist, um die Spurinformation auf der Grundlage eines von einem Bildsensor aufgenommenen Bildes des Werkstücks zu erhalten.

4. Evaluierungsvorrichtung (50) gemäß irgendeinem der Ansprüche 1 bis 3,
wobei der Generator (51c) so konfiguriert ist, dass, wenn die Spurinformationen zeigen, dass die Spur des Laserzielpunkts durch mehr als eine Runde von Laserstrahlung entlang eines identischen Pfades gebildet wird, der Generator (51c) eine Mehrzahl von Teilen von Intensitätsverteilungsinformationen erzeugt, die jeweils einer der mehr als einen Runde von Laserstrahlung entsprechen, und
wobei die Evaluierungseinrichtung (51d) konfiguriert ist, um den Schweißzustand auf der Grundlage von mindestens einem aus der Mehrzahl von Teilen von Intensitätsverteilungsinformationen zu evaluieren.

5. Evaluierungsvorrichtung (50) gemäß Anspruch 4, wobei die Evaluierungseinrichtung (51d) konfiguriert ist, um den Schweißzustand auf der Grundlage eines Durchschnitts oder einer Summe der Mehrzahl von Teilen von Intensitätsverteilungsinformationen zu evaluieren.

6. Evaluierungsvorrichtung (50) gemäß Anspruch 4,
wobei die Mehrzahl von Teilen von Intensitätsverteilungsinformationen in der Zeitreihen-Reihenfolge angeordnet ist, und
wobei die Evaluierungseinrichtung (51d) konfiguriert ist, um den Schweißzustand auf der Grundlage einer Differenz zwischen der Mehrzahl von Teilen von Intensitätsverteilungsinformationen, die in der Zeitreihen-Reihenfolge angeordnet sind, zu evaluieren.

7. Evaluierungsvorrichtung (50) gemäß irgendeinem der Ansprüche 1 bis 6,
wobei die Evaluierungseinrichtung (51d) konfiguriert ist, um auf der Grundlage der Intensitätsverteilungsinformation zu ermitteln, ob der Schweißzustand ein normaler Schweißzustand oder ein anormaler Schweißzustand ist, und
wobei die Evaluierungseinrichtung (51d) konfiguriert ist, um, wenn der Schweißzustand der anormale Schweißzustand ist, einen Typ des anormalen Schweißzustands zu ermitteln.

8. Evaluierungsverfahren, aufweisend:
Erhalten von Spurinformationen, die eine Spur eines durch einen Laserstrahl auf einem Werkstück erzeugten Laserzielpunkts zeigen,
Detektieren von Intensitätsinformationen, die in einer Zeitreihen-Reihenfolge Intensitäten einer optischen Rückkopplung des Laserstrahls zeigen, der von dem Werkstück zurückkehrt,
Korrelieren der Spurinformationen und der Intensitätsinformationen miteinander auf der Grundlage von Zeit, um Intensitätsverteilungsinformationen zu erzeugen, die eine Verteilung der Intensitäten über das Werkstück zeigen, und
Evaluieren, auf der Grundlage der Intensitätsverteilungsinformationen, eines Schweißzustands, der anzeigt, wie das Werkstück durch den Laserstrahl geschweißt wird.

9. Evaluierungsystem (1), aufweisend:
einen Laserkopf (100), der konfiguriert ist, um eine Form einer Spur eines von einem Laserstrahl auf einem Werkstück erzeugten Laserzielpunkts zu ändern,
einen Roboter (10), der konfiguriert ist, um den Laserkopf (100) relativ zum Werkstück zu bewegen,
einen Controller (20), der konfiguriert ist, um eine Bewegung des Laserkopfes (100) und eine Bewegung des Roboters (10) zu steuern, und
eine Evaluierungsvorrichtung (50) gemäß Anspruch 1, die konfiguriert ist, um einen Schweißzustand zu evaluieren, der anzeigt, wie das Werkstück durch den Laserstrahl geschweißt wird, wobei die Erhaltungsvorrichtung (51a) konfiguriert ist, um von dem Controller (20) die Spurinformationen zu erhalten, die die Spur des Laserzielpunkts zeigen.

10. Evaluierungssystem (1) gemäß Anspruch 9, ferner aufweisend:
einen Maschinenlerner (61c), der konfiguriert ist zum:
Erhalten der Intensitätsverteilungsinformationen,
Erhalten von Trainingsdaten, die auf der Grundlage der Intensitätsverteilungsinformationen und auf der Grundlage eines korrekten Wertes des von der Evaluierungseinrichtung (51d) evaluierten Schweißzustands erzeugt oder ausgewählt werden, wobei der korrekte Wert den Intensitätsverteilungsinformationen zugewiesen wird,
Durchführen von überwachtem Lernen mittels der Trainingsdaten, und
Erzeugen, auf der Grundlage des überwachten Lernens, eines Berechnungsmodells, das von der Evaluierungseinrichtung (51d) verwendet wird, um den Schweißzustand bei Empfang eines weiteren Teils von Intensitätsverteilungsinformationen zu evaluieren.

11. Evaluierungssystem (1) gemäß Anspruch 9, ferner aufweisend:
einen Maschinenlerner (61c), der konfiguriert ist zum:
Erhalten der Intensitätsverteilungsinformationen,
Durchführen eines unüberwachten Lernens mittels der Intensitätsverteilungsinformationen, und
Erzeugen, auf der Grundlage des unüberwachten Lernens, eines Berechnungsmodells, das von der Evaluierungseinrichtung (51d) verwendet wird, um den Schweißzustand bei Empfang eines weiteren Teils von Intensitätsverteilungsinformationen zu evaluieren.

12. Evaluierungssystem (1) gemäß Anspruch 10 oder 11, wobei die Evaluierungseinrichtung (51d) konfiguriert ist, um den Schweißzustand auf der Grundlage des von dem Maschinenlerner (61c) erzeugten oder aktualisierten Berechnungsmodells zu evaluieren.

13. Evaluierungsprogramm, aufweisend Befehle, um die Evaluierungsvorrichtung gemäß Anspruch 1 zu veranlassen, die folgenden Schritte auszuführen:
Erhalten von Spurinformationen, die eine Spur eines von einem Laserstrahl auf einem Werkstück erzeugten Laserzielpunkts anzeigen,
Detektieren von Intensitätsinformationen, die in einer Zeitreihen-Reihenfolge Intensitäten einer optischen Rückkopplung des vom Werkstück zurückkehrenden Laserstrahls zeigen,
Korrelieren der Spurinformationen und der Intensitätsinformationen miteinander auf der Grundlage von Zeit, um Intensitätsverteilungsinformationen zu erzeugen, die eine Verteilung der Intensitäten über das Werkstück zeigen, und
Evaluieren, auf der Grundlage der Intensitätsverteilungsinformation, eines Schweißzustands, der anzeigt, wie das Werkstück durch den Laserstrahl geschweißt wird.

## Revendications

1. Appareil d'évaluation (50), comprenant :
un dispositif d'obtention (51a) configuré pour obtenir des informations de trajectoire montrant une trajectoire d'un point cible laser réalisé par un faisceau laser sur une pièce à usiner ;
un détecteur (51b) configuré pour détecter des informations d'intensité montrant, dans un ordre de série temporelle, des intensités d'une rétroaction optique du faisceau laser revenant de la pièce à usiner ;
un générateur (51c) configuré pour corréler les informations de trajectoire et les informations d'intensité les unes avec les autres sur la base du temps de manière à générer des informations de distribution d'intensité montrant une distribution des intensités sur la pièce à usiner ; et
un évaluateur (51d) configuré pour évaluer, sur la base des informations de distribution d'intensité, un état de soudage indiquant comment la pièce à usiner est soudée par le faisceau laser.

2. Appareil d'évaluation (50) selon la revendication 1, dans lequel le dispositif d'obtention (51a) est configuré pour obtenir les informations de trajectoire sur la base d'une commande de mouvement provenant d'un contrôleur configuré pour :
contrôler un mouvement d'une tête laser configurée pour modifier une forme de la trajectoire du point cible de laser ; et
contrôler un mouvement d'un robot configuré pour déplacer la tête laser par rapport à la pièce à usiner.

3. Appareil d'évaluation (50) selon la revendication 1, dans lequel le dispositif d'obtention (51a) est configuré pour obtenir les informations de trajectoire sur la base d'une image de la pièce à usiner prise par un capteur d'image.

4. Appareil d'évaluation (50) selon l'une quelconque des revendications 1 à 3,
dans lequel le générateur (51c) est configuré de telle sorte que, lorsque les informations de trajectoire montrent que la trajectoire du point cible laser est formée par plus d'un cycle de rayonnement laser le long d'une trajectoire identique, le générateur (51c) génère une pluralité de pièces d'informations de distribution d'intensité correspondant chacune à l'un des plus d'un cycle de rayonnement laser, et
dans lequel l'évaluateur (51d) est configuré pour évaluer l'état de soudage sur la base d'au moins une de la pluralité de pièces d'informations de distribution d'intensité.

5. Appareil d'évaluation (50) selon la revendication 4, dans lequel l'évaluateur (51d) est configuré pour évaluer l'état de soudage sur la base d'une moyenne ou d'une somme de la pluralité de pièces d'informations de distribution d'intensité.

6. Appareil d'évaluation (50) selon la revendication 4,
dans lequel la pluralité de pièces d'informations de distribution d'intensité sont disposées dans l'ordre de série temporelle, et
dans lequel l'évaluateur (51d) est configuré pour évaluer l'état de soudage sur la base d'une différence entre la pluralité de pièces d'informations de distribution d'intensité agencées dans l'ordre de série temporelle.

7. Appareil d'évaluation (50) selon l'une quelconque des revendications 1 à 6,
dans lequel l'évaluateur (51d) est configuré pour déterminer, sur la base des informations de distribution d'intensité, si l'état de soudage est un état de soudage normal ou un état de soudage anormal, et
dans lequel, lorsque l'état de soudage est l'état de soudage anormal, l'évaluateur (51d) est configuré pour déterminer un type de l'état de soudage anormal.

8. Procédé d'évaluation, comprenant :
l'obtention d'informations de trajectoire montrant une trajectoire d'un point cible laser réalisé par un faisceau laser sur une pièce à usiner ;
la détection d'informations d'intensité montrant, dans un ordre de série temporelle, des intensités d'une rétroaction optique du faisceau laser revenant de la pièce à usiner ;
la corrélation des informations de trajectoire et des informations d'intensité les unes avec les autres sur la base du temps de manière à générer des informations de distribution d'intensité montrant une distribution des intensités sur la pièce à usiner ; et
l'évaluation, sur la base des informations de distribution d'intensité, d'un état de soudage indiquant comment la pièce à usiner est soudée par le faisceau laser.

9. Système d'évaluation (1), comprenant :
une tête laser (100) configurée pour modifier une forme d'une trajectoire d'un point cible laser réalisé par un faisceau laser sur une pièce à usiner ;
un robot (10) configuré pour déplacer la tête laser (100) par rapport à la pièce à usiner ;
un contrôleur (20) configuré pour contrôler un mouvement de la tête laser (100) et un mouvement du robot (10) ; et
un appareil d'évaluation (50) selon la revendication 1, configuré pour évaluer un état de soudage indiquant comment la pièce à usiner est soudée par le faisceau laser, dans lequel le dispositif d'obtention (51a) est configuré pour obtenir, à partir du contrôleur (20), les informations de trajectoire montrant la trajectoire du point cible laser.

10. Système d'évaluation (1) selon la revendication 9, comprenant en outre :
un apprenant machine (61c) configuré pour :
obtenir les informations de distribution d'intensité ;
obtenir des données d'entraînement générées ou sélectionnées sur la base des informations d'intensité et sur la base d'une valeur correcte de l'état de soudage évalué par l'évaluateur (51d), la valeur correcte étant attribuée aux informations de distribution d'intensité ;
effectuer un apprentissage supervisé en utilisant les données d'entraînement ; et
générer, sur la base de l'apprentissage supervisé, un modèle de calcul utilisé par l'évaluateur (51d) pour évaluer l'état de soudage à la réception d'une autre pièce d'informations de distribution d'intensité.

11. Système d'évaluation (1) selon la revendication 9, comprenant en outre :
un apprenant machine (61c) configuré pour :
obtenir les informations de distribution d'intensité ;
effectuer un apprentissage non supervisé en utilisant les informations de distribution d'intensité ; et
générer, sur la base de l'apprentissage non supervisé, un modèle de calcul utilisé par l'évaluateur (51d) pour évaluer l'état de soudage à la réception d'une autre pièce d'information de distribution d'intensité.

12. Système d'évaluation (1) selon la revendication 10 ou 11, dans lequel l'évaluateur (51d) est configuré pour évaluer l'état de soudage sur la base du modèle de calcul généré ou mis à jour par l'apprenant machine (61c).

13. Programme d'évaluation comprenant des instructions pour amener l'appareil d'évaluation selon la revendication 1 à exécuter les étapes suivantes :
obtenir des informations de trajectoire montrant une trajectoire d'un point cible laser réalisé par un faisceau laser sur une pièce à usiner ;
détecter des informations d'intensité montrant, dans un ordre de série temporelle, des intensités d'une rétroaction optique du faisceau laser revenant de la pièce à usiner ;
corréler les informations de trajectoire et les informations d'intensité les unes avec les autres sur la base du temps de manière à générer des informations de distribution d'intensité montrant une distribution des intensités sur la pièce à usiner ; et
évaluer, sur la base des informations de distribution d'intensité, un état de soudage indiquant comment la pièce à usiner est soudée par le faisceau laser.
